# EUROPÄISCHE PATENTSCHRIFT

(11) **EP 2 452 213 B1**
(45) Veröffentlichungstag und Bekanntmachung des Hinweises auf die Patenterteilung: **21.10.2015**
(21) Anmeldenummer: 10736976.1
(22) Anmeldetag: 22.06.2010
(51) Int. Cl.: B60S 1/08, G06K 9/00, H04N 5/225

(54) **OPTISCHES MODUL ZUR GLEICHZEITIGEN FOKUSSIERUNG AUF ZWEI SICHTBEREICHE**
OPTICAL MODULE FOR SIMULTANEOUSLY FOCUSING ON TWO FIELDS OF VIEW
MODULE OPTIQUE DESTINÉ À LA FOCALISATION SIMULTANÉE DE DEUX CHAMPS DE VISION

(30) Priorität: 29.04.2010 DE 102010018796; 09.11.2009 DE 102009052290; 06.07.2009 DE 102009031968
(43) Veröffentlichungstag der Anmeldung: 16.05.2012
(73) Patentinhaber: Conti Temic Microelectronic GmbH, 90411 Nürnberg (DE)
(72) Erfinder: ROTHENHÄUSLER, Konrad, 88147 Achberg (DE); MÜLLER, Gerhard, 88339 Bad Waldsee (DE); KÜHNKE, Lutz, Dr., 88045 Friedrichshafen (DE)
(74) Vertreter: Bobbert, Christiana
(86) Internationale Anmeldenummer: PCT/DE2010/000704
(87) Internationale Veröffentlichungsnummer: WO 2011/003381

(56) Entgegenhaltungen:
- EP-A1- 2 062 777
- EP-A2- 1 580 092
- WO-A1-2006/015905
- WO-A1-2009/020918
- WO-A1-2010/072198
- WO-A2-2006/121954
- DE-U1- 20 207 170
- JP-A- 2005 292 544
- JP-A- 2006 184 844
- US-A- 4 515 443
- US-A- 4 741 605
- US-A1- 2003 066 955
- US-A1- 2005 063 071
- US-A1- 2007 075 220
- US-A1- 2008 265 134
- US-A1- 2008 296 577
- US-A1- 2009 085 755

## Beschreibung

Die Erfindung betrifft ein optisches Modul, das als Kamerasystem in einem Fahrzeug als Umfeldsensor für Fahrerassistenzsysteme eingesetzt werden kann.

Intelligente Fahrerassistenzsysteme verwenden häufig ein Kamerasystem als Umfeldsensor, beispielsweise zur Erkennung verschiedenster Objekte im Verkehrsgeschehen.

Das Kamerasystem ist häufig hinter der Windschutzscheibe des Fahrzeugs angeordnet und blickt durch diese hindurch. Beispiele hierfür sind Fahrzeugkameras zur Erkennung der Fahrbahnmarkierungen, Nachtsichtkameras oder Stereokameras als optische Abstandssensoren. Alle diese optischen Sensoren benötigen u.a. eine klare Sicht durch die Windschutzscheibe, um fehlerhafte Messsignale zu vermeiden. Die Anzahl und Qualität von Funktionen, die durch die Auswertung der Bilddaten von Kamerasystemen realisiert werden, wurde in den letzten Jahren gesteigert.

So sind heute Fahrerassistenzsysteme in Fahrzeugen im Einsatz, die eine intelligente Lichtsteuerung, eine Verkehrszeichenerkennung für Geschwindigkeitsbegrenzungen und eine Spurhalteunterstützung kombinieren, die eine gemeinsame Kamera als Umfeldsensor nutzen.

### Änderung (D2) und Ergänzung (D9, D17) der Beschreibung des Standes der Technik

JP 2006-184844 A zeigt ein bildgebendes optisches System und eine Bildaufnahmevorrichtung mit einem solchen System, mit dem gleichzeitig mehrere zu untersuchende Objekte, die in Richtung der optischen Achse voneinander beabstandet sind mit ausreichender Auflösung auf eine gemeinsame Bildebene abgebildet werden können.

EP 2062777 A1 zeigt ein optisches Modul für ein einen Umgebungsbereich eines Fahrzeugs erfassendes Assistenzsystem mit einer im Bereich einer Innenseite einer Scheibe, insbesondere Windschutzscheibe, des Fahrzeugs angeordneten und in den Umgebungsbereich des Fahrzeugs gerichteten Kamera. Das optische Modul umfasst ein Objektiv, durch welches ein Fernbereich auf einen ersten Abschnitt einer Sensorfläche der Kamera scharf abbildbar ist, und eine optischen Anordnung, welche im Sichtfeld der Kamera angeordnet ist und durch welche ein einen Detektionsbereich der Scheibe umfassender Nahbereich auf einen zweiten Abschnitt der Sensorfläche der Kamera scharf abbildbar ist.

WO 2009/020918 A1 zeigt ein System zur Erfassung mehrerer Abbildungsbereiche gemäß dem Oberbegriff des Anspruchs 1. Die DE 102004037871 B4 zeigt ein Kamerasystem für ein den Außenvorraum in Fahrtrichtung eines Kraftfahrzeugs erfassendes Assistenzsystem. Durch Einbringen einer Vorsatzlinse in einem Teilsichtfeld vor dem Objektiv der Fahrzeugkamera werden Fern- (Straßenszene) und Nahbereich (Windschutzscheibe) auf einen Bildsensor abgebildet. Der Nahbereich kann durch die partielle Vorsatzlinse oder eine partielle Nahoptik gegebenenfalls auch mittels eines optischen Strahlteilers oder eines halbdurchlässigen Spiegels abgebildet werden. Es wird vorgeschlagen, einen Bildsensor abwechselnd für eine Außenraumassistenzfunktion und eine Regenfunktionalität zu verwenden.

Nachteile dieses Kamerasystems sind darin zu sehen, dass zusätzliche Vorsatzlinsen und gegebenenfalls Strahlteiler oder halbdurchlässige Spiegel teuer sind und eine hohe Anforderung an die exakte Ausrichtung zu den übrigen optischen Komponenten stellen. Die Stabilität des gesamten Kamerasystems kann hierdurch beeinträchtigt sein. Die Positionierung der Vorsatzlinse führt zu einer starken Verwischung im Kamerabild.

JP 2005-292544 A zeigt einen Fokussiermechanismus mit einem keilförmigen Fokussierelement zur gemeinsamen Bildaufnahme für Nah- und Fernbereich.

US 4741605 A zeigt ein multifokales Objektiv unter Verwendung einer Halblinse.

JP 2006-184844 A zeigt ein bildgebendes optisches System und eine Bildaufnahmevorrichtung mit einem solchen System, gemäß dem Oberbegriff des Anspruchs 1.

Die nachveröffentlichte WO 2010/072198 A1 zeigt ein optisches Modul mit multifokaler Optik zur Erfassung von Fern- und Nahbereich in einem Bild, welches insbesondere in einem Kraftfahrzeug zur Außenraumbeobachtung durch die Windschutzscheibe zum Einsatz kommt.

Aufgabe der Erfindung ist es, eine kostengünstige, stabile und zuverlässige Optik für einen Kamerasensor anzugeben.

Eine weitere Aufgabe besteht darin, gleichzeitig die Zuverlässigkeit der von dem Kamerasystem erfassten Bilddaten zu erhöhen bzw. zu gewährleisten und weitere Assistenzfunktionen mit einem Kamerasystem zu realisieren oder zu ermöglichen.

Das erfindungsgemäße optische Modul umfasst ein Halbleiterelement mit einer für elektromagnetische Strahlung sensitiven Fläche und ein Objektiv zum Projizieren elektromagnetischer Strahlung auf die sensitive Fläche des Halbleiterelements. Das Halbleiterelement ist also der Bildsensor, bzw. Kamerachip, insbesondere als CCD oder CMOS und kann auf einer Leiterplatte angeordnet sein. Das Objektiv umfasst bevorzugt mindestens eine Linse und einen Linsenhalter.

In dem optischen Modul ist ein optisches Element mit zwei Teilbereichen entweder im Raum zwischen dem Objektiv und der sensitiven Fläche des Halbleiterelements oder zwischen einzelnen Linsen des Objektivs im gesamten Querschnitt des Strahlengangs angeordnet. Sämtliche elektromagnetische Strahlung, die die sensitive Fläche des Halbleiterelements erreicht, tritt durch das optische Element.

Durch einen ersten Teilbereich des optischen Elements wird in einem ersten Bereich der sensitiven Fläche des Halbleiterelements ein erster Entfernungsbereich (z.B. Nahbereich) fokussiert abgebildet und durch einen zweiten Teilbereich des optischen Elements wird in einem zweiten Bereich der sensitiven Fläche des Halbleiterelements ein zweiter Entfernungsbereich (z.B. Fernbereich) abgebildet.

Mit anderen Worten wird eine optische Vorrichtung angegeben, die ein Halbleiterelement mit einer für elektromagnetische Strahlung sensitiven Fläche und ein Objektiv zum Projizieren elektromagnetischer Strahlung auf die sensitive Fläche des Halbleiterelements angegeben, bei der entweder zwischen dem Objektiv und der sensitiven Fläche des Halbleiterelements oder zwischen einzelnen Linsen des Objektivs ein optisches Element angeordnet ist, wobei das optische Element zwei Teilbereiche aufweist, deren optische Eigenschaften bei der Herstellung so eingestellt werden können, dass auf der sensitiven Fläche des Halbleiterelements nach Durchtritt durch die zwei Teilbereiche zwei unabhängige Fokusbereiche scharf abgebildet werden können.

Ist das optische Element unmittelbar über dem Bildsensor angeordnet, so erstreckt sich das optische Element über den gesamten optischen Bereich eines Bildsensors und ermöglicht eine bifokale oder multifokale Abbildung mit einem Objektiv und einem Bildsensor.

Das optische Element des optischen Moduls umfasst mindestens zwei planparallele Teilbereiche unterschiedlicher Dicke. Das optische Element ist hierbei abgestuft.

Es werden mindestens zwei verschiedene auch überschneidende Schärfentiefenbereiche in einem Kamerabild ermöglicht. Das optische Element hat die Eigenschaft, durch unterschiedlich ausgeprägte Teilbereiche des Elements einen unterschiedlichen axialen Versatz eines nicht parallelen Strahlengangs zu bewirken.

Das optische Element ist erfindungsgemäß aus einem Teil gefertigt.Bevorzugt ist das optische Element eine planparallele Platte oder mindestens zwei planparallele Platten (unterschiedlicher Dicke), die miteinander verbunden sind.

Das abgestufte optische Element des optischen Moduls ist derart angeordnet, dass der dünnere Teilbereich auf der der sensitiven Fläche des Halbleiterelements abgewandten Seite angeordnet sein. Hierbei kann ein Abstandshalter unterhalb des dünneren Teilbereichs vorgesehen sein, der bevorzugt außerhalb des Sichtfelds des Bildsensors angeordnet ist und eine stabile Befestigung des optischen Elements ermöglicht. Das optische Element ist also mit der durchgängigen Fläche so zum Halbleiterelement ausgerichtet, dass von der elektromagnetischen Strahlung die durch-gängige Fläche vor dem geometrischen Übergang im optischen Element passiert wird und der Abbildungsstrahlengang des Systems die Kante an einer Position auf der optischen Achse erreicht, die für die Abbildungsqualität und die Ausdehnung in einer Übergangszone günstiger ist als im umgekehrten Fall (geringerer Durchmesser des Abbildungsstrahlengangs).

In einer vorteilhaften Ausgestaltung ist ein Abstandshalter unterhalb des dünneren Teilbereichs des optischen Elements vorgesehen, der u-förmig unterhalb der Außenseite des dünneren Teilbereichs verläuft. Der Abstandshalter kann dazu dienen, eine Vergussmasse zum Abdichten von Halbleiterelement und optischem Element vom Eindringen in den Bereich zwischen Halbleiterelement und dünnerem Teilbereich abzuhalten.

In einer bevorzugten Ausführungsform des optischen Moduls ist das optische Element derart aufgebaut, dass der dünnere Teilbereich den dickeren Teilbereich außerhalb des Sichtbereichs vollständig umläuft. Der Abstandshalter umläuft rahmenförmig den Bereich zwischen sensitiver Fläche und optischem Element.

Der Abstandshalter kann in einer vorteilhaften Weiterbildung als Rahmen für die Vergussmasse zur Abdichtung des Halbleiterelements ausgebildet sein. Dadurch ist die Ausbreitung der Vergussmasse räumlich begrenzt.

Die Erfindung betrifft zudem eine Anordung eines optischen Moduls im Innenraum eines Fahrzeugs gemäß Ansprüche 5 - 14.

In einer bevorzugten Ausführungsform sind in dem Fahrzeug das Objektiv und das optische Element derart eingestellt, dass die Außenseite der Windschutzscheibe durch den ersten Teilbereich des optischen Elements fokussiert auf dem ersten Bereich der sensitiven Fläche des Halbleiterelements und der Bereich vor dem Fahrzeug durch den zweiten Teilbereich des optischen Elements auf dem zweiten Bereich der sensitiven Fläche des Halbleiterelements abgebildet wird.

In einem Fahrzeug kann in einer bevorzugten Weiterbildung ein kamerabasierter Regensensor vorgesehen sein. Die Bilder vom ersten Bereich der sensitiven Fläche des Halbleiterelements (Außenseite der Windschutzscheibe) werden ausgewertet, wobei Regen oder Schmutzpartikel auf der Windschutzscheibe erkannt werden. Ein Ausgabesignal zur Aktivierung kann an eine Scheibenwischersteuerung und/oder Scheibenreinigung ausgegeben werden. Weitere vorteilhafte Funktionen sind auf der Basis des kamerabasierten Regensensors möglich: insbesondere sind Geschwindigkeitsbegrenzungen oft mit Zusatzzeichen wie "Bei Nässe" versehen. Eine kamerabasierte Verkehrszeichenerkennung kann zwar dieses Zusatzzeichen erkennen, hat aber zunächst keine Informationen vorliegen, ob es regnet und falls ja wie stark. Diese Informationen kann der erfindungsgemäße Regensensor liefern, der aufgrund des erfindungsgemäßen optischen Elements auf derselben Kamera bzw. demselben optischen Modul läuft wie die Verkehrszeichenerkennung. Auch ein Datenaustausch zwischen beiden Assistenzfunktionen lässt sich problemlos und günstig einrichten.

In einer bevorzugten Ausgestaltung ist eine Beleuchtungsquelle vorgesehen, die den Bereich des Sichtfeldes durch die Windschutzscheibe beleuchtet, durch den die Nahbereichsabbildung erfolgt, d.h. der Bereich, der im ersten Bereich der sensitiven Fläche des Halbleiterelements abgebildet wird. Vorteilhaft ist es, das Nahfeld mit IR-Licht auszuleuchten. Die Beleuchtungsquelle kann vorteilhaft durch einen optischen Verschluss gesteuert werden, insbesondere mit variabler Beleuchtungszeit der gesamten sensitiven Fläche des Halbleiterelements oder insbesondere für den Teilbereich der aktiven Fläche auf dem die Abbildung des Nahfeldes erfolgt.

Die Strahlung der Beleuchtungsquelle kann insbesondere über einen flexiblen Lichtleitkörper in die Windschutzscheibe eingekoppelt werden. Ein geeigneter flexibler Lichtleitkörper ist beispielsweise transparentes Silikon. Die Teilstrahlungsenergie kann über ein an der Scheibe angebrachtes Absorberelement in Wärme umgewandelt werden, die zum Heizen der Windschutzscheibenteilfläche dient. Als Absorberelemente können z.B. die aufgebrachten Heizdrähte einer bestehenden Scheibenheizung eingesetzt werden. Die als Absorberfläche verwendeten Heizdrähte können gleichzeitig als Abschattung des in Fahrtrichtung des Kraftfahrzeugs abgestrahlten Lichts dienen.

In einer bevorzugten Ausführungsform ist eine zumindest einseitige Filterbeschichtung des zweiten Teilbereichs des optischen Elements vorgesehen, dessen Wellenlängenfilter den Wellenlängenbereich unterdrückt, der von der Beleuchtungsquelle zur Ausleuchtung des Nahbereichs verwendet wird. Der Bereich des Sichtfeldes durch die Windschutzscheibe wird insbesondere mit Licht im infraroten Wellenlängenbereich (IR) ausgeleuchtet und der zweite Teilbereich des optischen Elements mit einem Filter beschichtet, der die Transmission im infraroten Wellenlängenbereich unterdrückt. Dieser Wellenlängenbereich wird vom Fahrer und anderen Verkehrsteilnehmern nicht wahrgenommen. Gleichzeitig hat die sensitive Fläche des Halbleiterelements eine sehr hohe Empfindlichkeit für den IR-Bereich, was eine Ausleuchtung des Nahfeldes mit einer relativ geringen IR-Lichtintensität ermöglicht. Die Anbringung der Beleuchtungsquelle ist in mehreren Bereichen möglich. Die Beleuchtung kann im Dauerbetrieb oder zyklisch erfolgen. Eine zyklische Beleuchtung mit einem sinusförmigen Intensitätsverlauf oder eine getaktete Beleuchtung ist zu bevorzugen um Störeinflüsse im Bild des Fernbereichs zu vermeiden bzw. zu mildern.

Zusätzlich zu dem kamerabasierten Regensensor kann in einer vorteilhaften Ausgestaltung ein kapazitiver Regensensor im Fahrzeug vorgesehen sein. Die Signale von kapazitivem und kamerabasiertem Regensensor werden durch eine gemeinsame Auswerteeinheit ausgewertet. Beide Sensortypen ergänzen sich sehr gut und bieten in der Kombination hervorragende Erkennungseigenschaften. Der kapazitive Sensor kann vorteilhaft als Leiterbahn in transparenter Folie oder in einem Silikonkissen ausgeführt sein und die Elektronik in das Beleuchtungsmodul für den kamerabasierten Regensensor integriert werden.

Der kamerabasierte Regensensor hat beispielsweise Vorteile bei feinstem Nieselregen, während der kapazitive Regensensor hierbei kaum eine Signaländerung durch sich ändernde Kapazität erfährt. Der kapazitive Regensensor hat dagegen z.B. Vorteile bei einem vollflächigen Wasserfilm auf der Windschutzscheibe und kann diesen aufgrund der starken Kapazitätsänderung sicher detektieren, während der kamerabasierte Regensensor nur wenige Kanten im Bild finden wird, aus denen er auf Regentropfen schließt.

In einer vorteilhaften Ausgestaltung der Erfindung kann eine Keilplatte zwischen Windschutzscheibe und Objektiv im Sichtfeld der Nahbereichsabbildung angeordnet sein. Die Keilplatte ist also im objektseitigen Strahlengang der Nahbereichsabbildung angeordnet. Die Keilplatte lenkt elektromagnetische Strahlung von einem Bereich der Windschutzscheibe, welcher vom Sichtfeld der Fernbereichsabbildung durchdrungen wird, in das Sichtfeld der Nahbereichsabbildung ab. Die Keilplatte kann durch zwei Planflächen oder eine Planfläche und eine nichtplanare Fläche oder durch zwei nichtplanare Flächen definiert sein. Eine nichtplanare Fläche bedeutet eine sphärische, asphärische oder mikrostrukturierte Fläche. Die Keilplatte kann insbesondere aus einem transparenten Kunststoff bestehen. Die Keilplatte ist bevorzugt derart angeordnet, dass das dicke Ende oben und das dünne Ende unten ist. Dadurch wird der Strahlengang der Nahbereichsabbildung nach oben abgelenkt. Die Keilplatte kann vorteilhaft unterhalb oder im unteren Bereich des Strahlengangs der Fernbereichsabbildung angeordnet sein.

Bevorzugt ist die Keilplatte mit einer Filterbeschichtung beschichtet, wobei die Filterbeschichtung bestimmte Wellenlängenbereiche unterdrückt, z.B. den sichtbaren Wellenlängenbereich. Die Oberseite der Keilplatte kann vorteilhaft zur Streulichtunterdrückung geschwärzt ist.

Der Vorteil bei Einsatz einer Keilplatte liegt in einem kleineren benötigten Schwarzdruckausschnitt der Windschutzscheibe sowie in kleineren Abmessungen des optischen Moduls bzw. Kamerasystems.

In einer bevorzugten Ausführungsform umfasst ein Fahrzeug eine Beleuchtungsquelle, deren elektromagnetische Strahlung über ein Einkoppelelement (z.B. einen flexiblen Lichtleitkörper) in die Windschutzscheibe eingekoppelt wird. Ein Auskoppelelement ist vorgesehen, welches durch Kleben oder Anpressen in festem Kontakt mit der Windschutzscheibe steht. In Abwesenheit von Wassertropfen auf der Windschutzscheibe wird die eingekoppelte elektromagnetische Strahlung innerhalb der Windschutzscheibe totalreflektiert. Durch das Auskoppelelement wird die Strahlung in Richtung des optischen Moduls ausgekoppelt und im Bereich der Nahbereichsabbildung (Teilbereich zur Regenerkennung) auf den Bildsensor abgebildet. Befinden sich Wassertropfen auf der Windschutzscheibe, wird ein Teil der eingekoppelten elektromagnetischen Strahlung durch die Wassertropfen ausgekoppelt und nicht mehr zum Auskoppelelement totalreflektiert. Somit kann das Vorliegen von Wassertropfen und die Regenmenge auf der Windschutzscheibe als Signaldifferenz von ausgekoppelter Intensität bei trockener im Vergleich zu nasser Windschutzscheibe ermittelt werden.

Das Auskoppelelement kann bevorzugt mit einer speziellen Filterbeschichtung beschichtet sein, die bestimmte Wellenlängenbereiche unterdrückt, z.B. den sichtbaren Wellenlängenbereich.

Das Auskoppelelement kann vorteilhaft auf der dem Objektiv zugewandten Seite durch geeignete Oberflächenbehandlung als Mattscheibe ausgebildet sein, wobei die Mattscheibenfläche in der Objektebene der Nahbereichsabbildung positioniert ist.

Das Auskoppelelement bedeckt in einer erweiterten Ausführungsform vorteilhaft nur eine definierte Teilfläche des Teilbereichs des Windschutzscheibensichtfeldes, der von der Nahbereichsabbildung erfasst wird. Dadurch kann sowohl die Differenzmessung des durch die Regentropfen ausgekoppelten Signals durchgeführt werden, als auch in dem anderen Teil-Nachfolgend wird die Erfindung anhand von Ausführungsbeispielen und Figuren erläutert.
Fig. 1: Abbildungseigenschaften eines optischen Moduls in einem Kraftfahrzeug mit einem gestuften optischen Element zwischen Objektiv und sensitiver Fläche des Halbleiterelements
Fig. 2a und 2b: Optisches Element mit unterschiedlich dicken Teilbereichen mit Orientierung der durchgängigen Fläche des optischen Elements hin zur sensitiven Fläche des Halbleiterelements
Fig. 3: Anordnung eines gestuften optischen Elements über einem Halbleiterelement auf einem Substrat
Fig. 4a und b: Anordnung eines gestuften optischen Elements über einem Halbleiterelement auf einem Substrat mit Orientierung der durchgängigen Fläche des optischen Elements zur dem Halbleiterelement abgewandten Seite (Querschnitt und Draufsicht)
Fig. 5a und b: Aufbau von Bildsensorkomponenten mit einem gestuften optischen Element auf einem Träger
Fig. 6a und b: Rahmenförmige Abstandshalter für das optische Element in Draufsicht
Fig. 7: Aufbau eines optischen Moduls mit Objektiv und Bildsensorkomponente

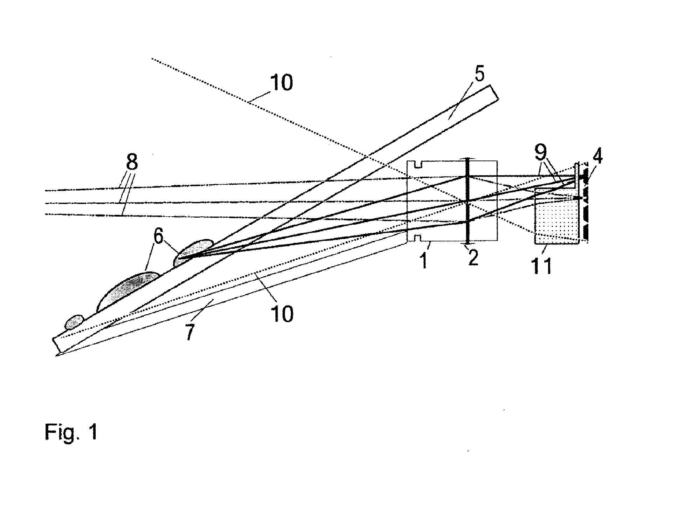

In Fig. 1 sind schematisch die Abbildungseigenschaften eines optischen Moduls mit einem Objektiv (1), einem optischen Element (11) mit zwei Teilbereichen und einem Halbleiterelement (4) zur Detektion von elektromagnetischer Strahlung dargestellt. Das dargestellte optische Modul ist unterhalb einer geneigten Scheibe (5), z.B. der Windschutzscheibe eines Fahrzeugs, angeordnet.

Innerhalb der gestrichelten Linien (10) liegt der Sichtbereich des optischen Moduls, der nach unten durch eine Streulichtblende (7) begrenzt ist.

Das dargestellte optische Element (11) weist einen dünneren ersten Teilbereich (oben) und einen dickeren zweiten Teilbereich (unten) auf. Jeder Teilbereich entspricht einer planparallelen Platte.

Das Prinzip für diese bifokale Optik basiert auf dem axialen Versatz eines nicht parallelen Strahlengangs einer brechenden Planfläche. Das Objektiv (1) ist derart fokussiert, dass der Fernbereich (8) nur durch den dickeren Teilbereich des optischen Elements (11) scharf auf der sensitiven Fläche des Halbleiterelements (4) abgebildet wird und der Nahbereich (9) durch den dünneren Teilbereich. Die Hauptebene (2) des Objektivs (1) wird dabei entsprechend festgelegt. Der Nahbereich (9) ist auf die Außenseite der Windschutzscheibe (5) fokussiert, so dass dort befindliche Regentropfen (6) oder Schmutzpartikel im entsprechenden Teil des Kamerabildes detektiert werden können. Die Fernbereichsabbildung (8) wird für kamerabasierte Assistenzfunktionen ausgewertet, z.B. Fahrspurerkennung, Verkehrszeichenerkennung, automatische Lichtsteuerung, etc.

Das optische Element (11) des optischen Moduls befindet sich entweder wie dargestellt zwischen der Abbildungsoptik (1) (also dem Objektiv) und dem Bildsensor (4) und kann dessen sensitive Fläche komplett überdecken oder es befindet sich bei einer Optik mit Zwischenabbildung in der Abbildungsebene der Zwischenabbildung, z.B. zwischen zwei Linsen des Objektivs (1) (nicht dargestellt).

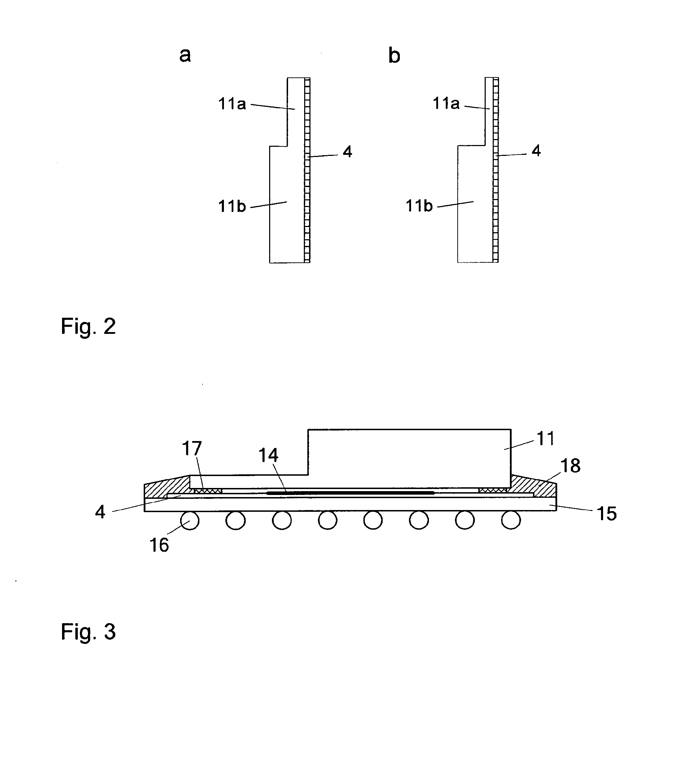

In Fig. 2a und b ist das optische Element (11) gestuft ausgebildet mit einer Orientierung der durchgängigen Fläche hin zum Bildsensor bzw. Halbleiterelement (4)

Das optische Element (11) hat einen ersten Teilbereich (11a), der vom Strahlengang für die Nahbereichsabbildung passiert wird und einen zweiten Teilbereicht (11b), der vom Strahlengang für die Fernbereichsabbildung passiert wird. In Fig. 2a und b weist der dickere Teilbereich (11b) jeweils eine konstante Dicke auf, während die Dicke des dünneren Teilbereichs (11a) bei der Herstellung variiert wurde.

Eine konstante Dicke des dickeren Bereichs (11b) bewirkt eine gleichbleibende Objektweite des Fernbereichs. Durch die Dickenvariation des dünneren Bereichs (11a) kann die Fokussierung im Nahbereich angepasst werden.

Die Fokussierung wird bewirkt durch eine Änderung des axialen Versatzes im nichtparallelen Strahlengang. Die Anpassung der Fokussierung auf den Nahbereich kann dazu ausgenutzt werden, um verschiedene Einbausituationen und damit unterschiedliche Objektivweiten im Nahbereich abzudecken wie sie beispielsweise bei verschiedenen Fahrzeugtypen auftreten können.

Bei einer stärkeren Auslegung des dünneren Teilbereichs (11a) des optischen Elements (11) nimmt der axiale Versatz zu und damit verschiebt sich der Schärfentiefenbereich der Nahbereichsabbildung objektseitig weg vom Objektiv, d.h. die Objektweite wird größer (vgl. Fig. 2a). Bei einer schwächeren Auslegung des dünneren Teilbereichs (11a) entsprechend Fig. 2b nimmt der axiale Versatz ab und damit verschiebt sich der Schärfentiefenbereich der Nahbereichsabbildung objektseitig zum Objektiv hin, d.h. die Objektweite wird kleiner.

Bei einer Anpassung der optischen Vorrichtung auf eine geänderte Objektweite wird somit lediglich der dünnere Teilbereich (11a) des optischen Elements (11) modifiziert, den der Strahlengang der Nahbereichsabbildung passiert.

Dies hat den entscheidenden Vorteil, dass die Fernbereichsabbildung, die in einer bevorzugten Ausgestaltung der Erfindung auch für sicherheitsrelevante Fahrerassistenzfunktionen verwendet wird, durch einen einheitlichen Strahlengang aufgrund der gleichbleibenden optischen Komponenten im dickeren Teilbereich (11b) nicht beeinflusst wird.

Eine Anpassung an verschiedene Einbausituationen mit dem optischen Element (11) kann auch durch Variation der Dicke eines flächig aufgetragenen Klebemittels zwischen dem optischem Element (11) und dem Bildsensor (4) bzw. einem zusätzlichen Abdeckglas des Bildsensors (4) erfolgen, da auch das Klebemittel einen axialen Versatz in einem nicht parallelen Strahlengang bewirkt.

Bei den in Fig. 2a und b dargestellten Ausführungsvarianten des optischen Moduls besteht zudem die Möglichkeit einer Abschirmung der sensitiven Fläche des Halbleiterelements (4) durch das optische Element (11) vor Umwelteinflüssen.

Alternativ zu dem dargestellten gestuften optischen Element (11) kann ein optisches Element verwendet werden, das zwei Teilbereiche mit unterschiedlichen Materialien umfasst (einteilig oder zweiteilig zusammengefügtes Element), das sich über den gesamten Bildsensor erstreckt. Insbesondere Materialien mit unterschiedlichem Brechungsindex sind hierfür geeignet. Mittels geeigneter Materialwahl der Teilbereiche (11a, 11b) kann hierbei der Brechungsindex und damit die Nahbereichsfokussierung variiert werden.

Bei Verwendung eines größeren Brechungsindex im ersten Teilbereich (11a) nimmt der axiale Versatz zu und damit verschiebt sich der Schärfentiefenbereich der Nahbereichsabbildung weg vom Objektiv (1). Das bedeutet die Objektweite wird größer. Bei Verwendung eines geringeren Brechungsindex im ersten Teilbereich (11a) nimmt dagegen der axiale Versatz ab und damit verschiebt sich der Schärfentiefenbereich der Nahbereichsabbildung zum Objektiv (1) hin. Die Objektweite wird kleiner.

Auch eine Kombination der Variation von Dicke und Brechungsindizes in den Teilbereichen (11a, 11b) des optischen Elements (11) ist realisierbar.

In Fig. 3 ist eine Abschirmung der sensitiven Fläche (14) des Halbleiterelements (4) vor Umwelteinflüssen bei dem optischen Modul dargestellt. Das optische Element (11) ist entsprechend Fig. 2a und b orientiert und mit einem Klebemittel (17) außerhalb der sensitiven Fläche (14) auf dem Halbleiterelement (4) befestigt. Das Halbleiterelement (4) ist auf einem Substrat (15) angeordnet, unter dem Lötperlen (Solder balls) (16) angeordnet sind. Das Substrat (15) ist beispielsweise eine Leiterplatte, die zur Entflechtung und Umsetzung der fein strukturierten elektrischen Anschlüsse des Halbleiterelements (4) auf die Lötperlen (16) an der Unterseite des Substrats (15) dient. Das Halbleiterelement (4) ist typischerweise auf das Substrat (15) geklebt und über Bondverbindungen mit den elektronischen Strukturen auf dem Substrat (15) verbunden.

Eine Abdichtung (18), z.B. mittels einer Vergussmasse, überdeckt den Verbindungsbereich von Substrat (15), Halbleiterelement (4), Klebemittel (17) und optischem Element (11). Lichtreflexe an den Oberflächen können somit unterdrückt werden. Die sensitive Fläche des Halbleiterelements (4) ist vor Umwelteinflüssen geschützt.

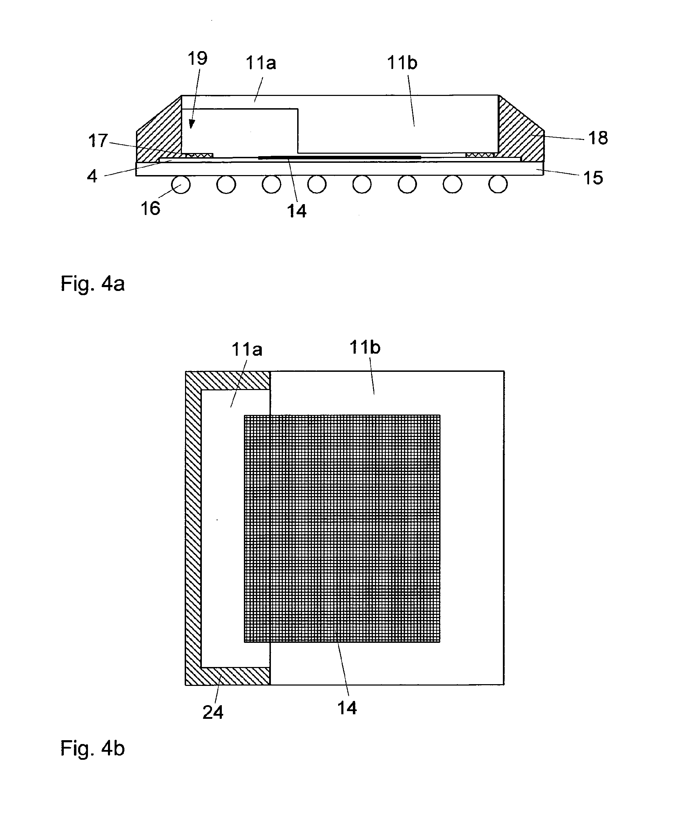

In einer alternativen Ausführungsform des optischen Moduls entsprechend Fig. 4a kann das optische Element (11) derart angeordnet sein, dass der dünnere Teilbereich (11a) auf der der sensitiven Fläche (14) des Halbleiterelements (4) abgewandten Seite ist. Dadurch ist die obere Außenseite der Bildsensoreinheit (4; 14; 11) eine durchgängige transparente Planplatte. Eine Abdichtung (18) am Rand des optischen Elements (11) kann auch bei diesem Aufbau des optischen Moduls erfolgen, um die sensitive Fläche (14) des Halbleiterelements (4) vor Umwelteinflüssen und Streulicht zu schützen. Am Rand des optischen Elements (11) findet sich unterhalb des dünneren Teilbereichs (11a) eine Lücke (19). Da dieser Bereich nicht auf der sensitiven Fläche (14) abgebildet wird, wird hier zur Stabilisierung ein Abstandshalter (24) eingefügt, der auch ein Eindringen der abdichtenden Vergussmasse (18) verhindert. Alternativ könnte eine ausreichend zähflüssige Vergussmasse (18) verwendet werden, die nicht auf die sensitive Fläche (14) des Halbleiterelements (4) fließt, und auf einen Abstandshalter verzichtet werden.

Diese Orientierung bzw. Anordnung des optischen Elements (11) bietet gegenüber der in Fig. 1-3 gezeigten den Vorteil, dass die Kante zwischen den beiden Teilbereichen (11a, 11b) nahe an der sensitiven Fläche (14) des Halbleiterelements (4) befindlich ist. Dadurch wir eine deutliche Verbesserung der optischen Eigenschaften des Moduls erzeugt. Ein weiterer Vorteil liegt darin, dass die äußere stufenlose Fläche des optischen Elements (11) deutlich besser gereinigt werden kann.

Die Draufsicht in Fig. 4b zeigt einen u-förmigen Abstandshalter (24), der unterhalb des dünneren Teilbereichs (11a) am Rand des optischen Elements (11) außerhalb der sensitiven Fläche (14) des Halbleiterelements verläuft. Der Randbereich des optischen Elements (11) liegt nicht über der sensitiven Fläche (14) des Halbleiterelements.

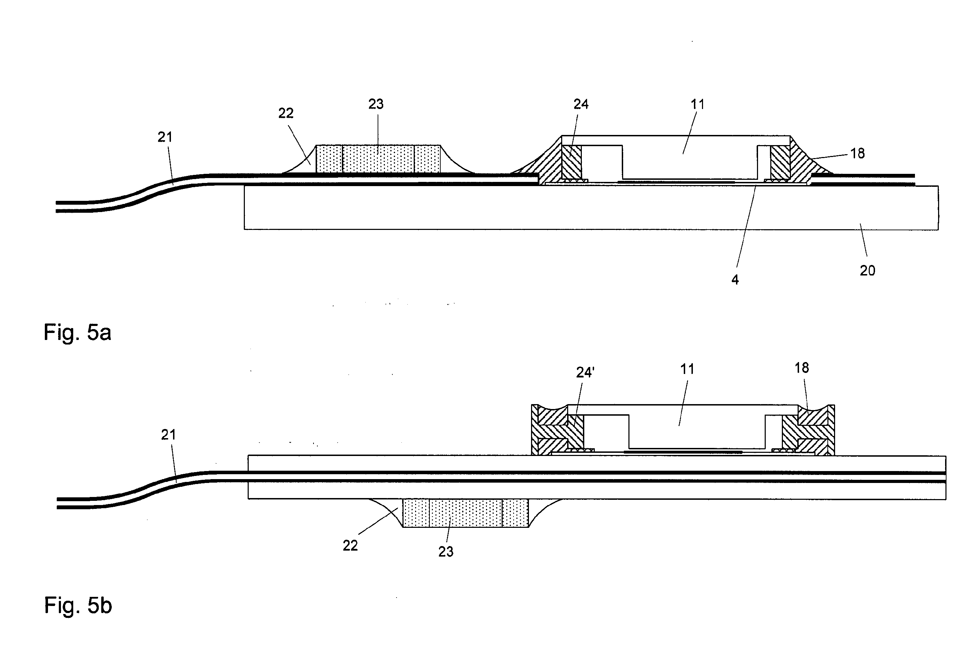

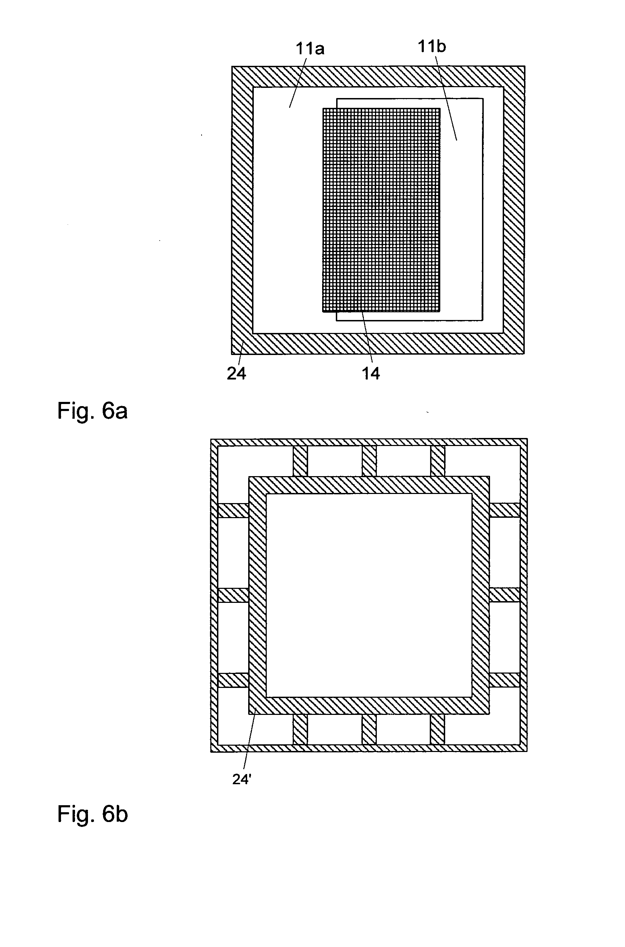

In Fig. 5a ist ein Aufbau einer Bildsensorkomponente mit einem gestuften optischen Element (11) auf einem Träger (20) dargestellt. Diese Erweiterung des Substrats (15) zu einem Träger (20) beispielsweise für weitere Elektronikkomponenten oder das Objektiv bietet sich an. Das gestufte optische Element (11) ist gegenüber dem in Fig. 4a und b dargestellten dahingehend variiert, dass der dickere Teilbereich (11b) vollständig vom dünneren Teilbereich (11a) umgeben ist. Da der Randbereich des optischen Elements (11) nicht über der sensitiven Fläche (14) des Halbleiterelements (4) liegt, beeinflusst diese Variation die optischen Eigenschaften des optischen Elements (11) nicht. Unter dem umlaufenden dünneren Teilbereich (11a) kann nun ein rahmenförmiger Abstandshalter (24, 24') verwendet werden, um das optische Element (11) zu halten bzw. zu stützen. Eine Draufsicht des optischen Elements (11), des rahmenförmigen Abstandshalters (24) und der sensitiven Fläche (14) des Halbleiterelements (4) zeigt Fig. 6a.

Der verwendete Abstandhalter (24, 24') kann unterschiedlich gestaltet werden und bei der Herstellung des optischen Moduls zu verschieden Zeitpunkten eingebracht werden. Der Abstandshalter (24, 24') kann Bestandteil des optischen Elements (11) sein oder separat vorliegen. Der Abstandshalter (24, 24') kann auf dem Substrat (15) oder auf dem Halbleiterelement (4) aufliegen. Zudem kann der Abstandshalter (24, 24') so ausgestaltet sein, dass er über das Halbleiterelement (4) hinausragt und für eine Verbindung zum Objektiv (1) genutzt werden kann.

Eine Abdichtung (18) von optischem Element (11), Abstandshalter (24, 24') und Halbleiterelement (4) ist vorgesehen. Der Träger (20) ist mit einer flexiblen Anschlusskontaktierung (21) ausgestattet. Dadurch wird eine räumliche Ausrichtung des optischen Moduls gewährleistet. Geeignete Anschlusskontaktierungen (15) sind z.B. Bondverbindungen oder flexible Kabel oder Leiterplatten, z.B. aus Polyimid. Flexible Leiterplatten (z.B. Flex-PCB) können gleichzeitig als Substrat (15) dienen.

Auf der Oberfläche des Trägers (20) können weitere elektronische Bauteile (SMD-Komponenten) (23) wie z.B. ein Chip zur Bildverarbeitung angebracht sein, beispielsweise mit einer Lötverbindung (22).

In Fig. 5b ist ein alternativer Aufbau einer Bildsensorkomponente dargestellt. Hier ist der Träger (20) auf der Unterseite mit einer SMD-Komponente (23), d.h. beidseitig bestückt. Der Abstandshalter (24') erfüllt in dieser Ausführungsform eine spezielle Funktion: er dient auch als Rahmen für die Vergussmasse zur Abdichtung (18) des Halbleiterelements (4), des optischen Elements (11) und des Trägers (20) und schränkt den Bereich, in den die Vergussmasse (18) fließen kann, auch nach außen ein. Eine Draufsicht dieses rahmenförmige Abstandshalters (24') zeigt Fig. 6b.

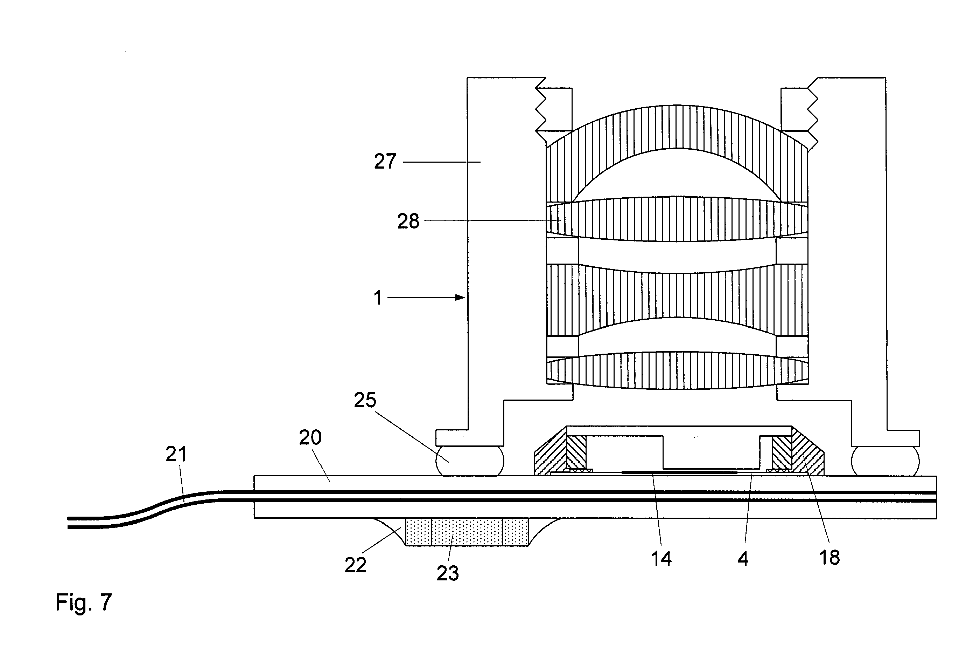

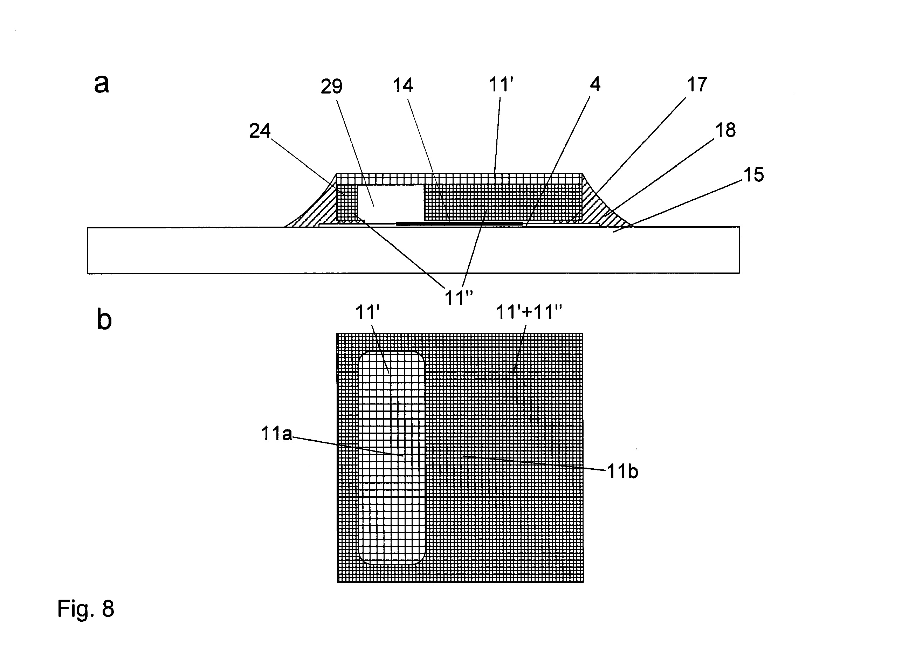

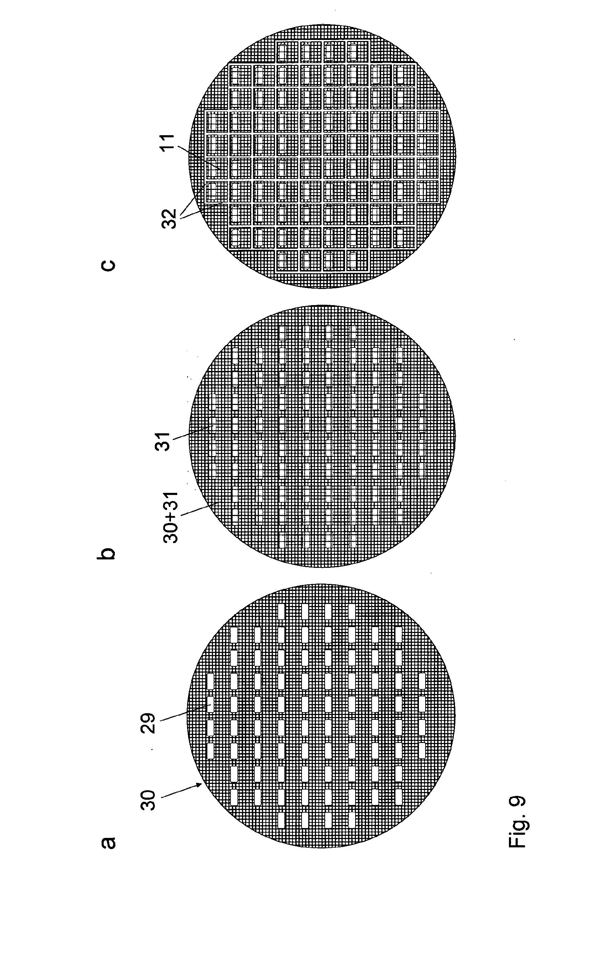

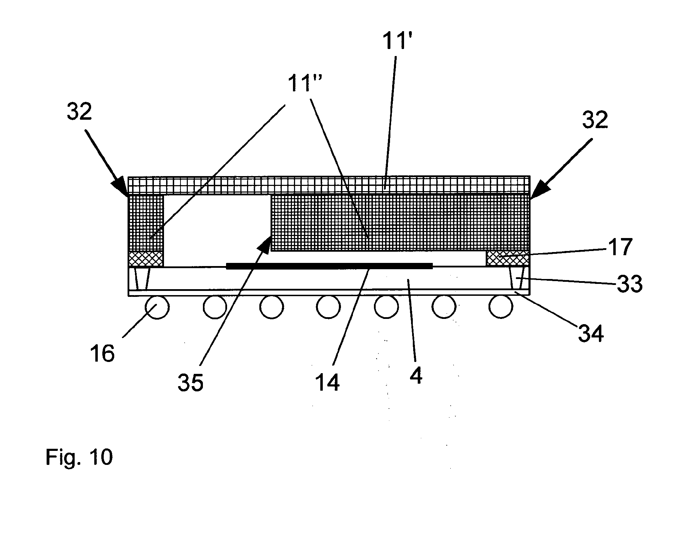

In Fig. 7 ist der Aufbau eines optischen Moduls mit Objektiv (1) und Bildsensorkomponente dargestellt. Ausgehend von einem Trägermodul (Fig. 5a oder b) kann ein Objektiv (1) mit mindestens einer Linse (28) mit der Unterseite des Objektivgehäuses (27) auf den Träger (20) geklebt (25) werden, so dass die elektromagnetische Strahlung durch das Objektiv (1) und das optische Element (11) auf die sensitive Fläche (14) des Halbleiterelements (4) gelangt. Nach Aufbringen des Klebers (25) kann das Objektiv (1) gegenüber der sensitiven Fläche (14) des Halbleiterelements (4) justiert werden. Nach dem Aushärten des Klebers (25) kann das optische Modul eingesetzt oder eingebaut werden.

### Bezugszeichen

- 1: Objektiv
- 2: Hauptebene des Objektivs
- 4: Halbleiterelement
- 5: Windschutzscheibe
- 6: Regentropfen
- 7: Streulichtblende
- 8: Fernbereich
- 9: Nahbereich
- 10: Sichtbereich
- 11: optisches Element mit zwei Teilbereichen
- 11a, 11b: erster und zweiter Teilbereich von 11
- 11', 11": durchgängiges und unterbrochenes Teil von 11
- 14: sensitive Fläche des Halbleiterelements
- 15: Substrat
- 16: Lötperle (Solder ball)
- 17: Klebemittel
- 18: Abdichtung/Vergussmasse
- 19: Lücke
- 20: Träger
- 21: flexible Anschlusskontaktierung
- 22: Lötverbindung
- 23: SMD-Komponente
- 24, 24': Abstandshalter
- 25: Kleber
- 27: Objektivgehäuse
- 28: Linse
- 29: Aussparung

## Patentansprüche

1. Optisches Modul umfassend
- ein Halbleiterelement (4) mit einer für elektromagnetische Strahlung sensitiven Fläche (14) und
- ein Objektiv (1) zum Projizieren elektromagnetischer Strahlung auf die sensitive Fläche (14) des Halbleiterelements (4),
wobei das optische Modul als Kamerasystem in einem Fahrzeug als Umfeldsensor für Fahrerassistenzsysteme eingesetzt werden kann,
wobei ein optisches Element (11) mit mindestens zwei planparallelen Teilbereichen (11a, 11b) unterschiedlicher Dicke entweder im Raum zwischen dem Objektiv (1) und der sensitiven Fläche (14) des Halbleiterelements (4) oder zwischen einzelnen Linsen des Objektivs im gesamten Querschnitt des Strahlengang angeordnet ist, so dass durch einen ersten Teilbereich (11a) des optischen Elements (11) in einem ersten Bereich der sensitiven Fläche (14) des Halbleiterelements (4) ein erster Entfernungsbereich (8) abgebildet wird und durch einen zweiten Teilbereich (11b) des optischen Elements (11) in einem zweiten Bereich der sensitiven Fläche (14) des Halbleiterelements (4) ein zweiter Entfernungsbereich (9) abgebildet wird,
wobei das optische Element (11) gestuft ausgebildet ist, **dadurch gekennzeichnet, dass** das optische Element (11) derart angeordnet ist, dass die Abstufung des optischen Elements (11) zur sensitiven Fläche (14) des Halbleiterelements (4) hin orientiert ist und sich eine durchgängige Fläche des optischen Elements (11) in der dem Halbleiterelement (4) abgewandten Richtung befindet.

2. Optisches Modul nach Anspruch 1, **dadurch gekennzeichnet, dass** ein Abstandshalter (24) zwischen dem Halbleiterelement (4) und einem dünneren Teilbereich (11a) des optischen Elements vorgesehen ist.

3. Optisches Modul nach Anspruch 2, **dadurch gekennzeichnet, dass** der dünnere Teilbereich (11a) den dickeren Teilbereich (11b) des optischen Elements (11) vollständig umläuft und der Abstandshalter (24, 24') rahmenförmig den Bereich zwischen sensitiver Fläche und optischem Element (11) umläuft.

4. Optisches Modul nach Anspruch 3, **dadurch gekennzeichnet, dass** der Abstandshalter (24') als Rahmen für eine Vergussmasse zur Abdichtung des Halbleiterelements (4) zum Schutz der sensitiven Fläche (14) des Halbleiterelements (4) vor Umwelteinflüssen und Streulicht ausgebildet ist.

5. Anordnung eines optischen Moduls nach einem der vorgenannten Ansprüche im Innenraum eines Fahrzeugs hinter der Windschutzscheibe (5) in Fahrtrichtung den Außenraum erfassend.

6. Anordnung eines optischen Moduls nach Anspruch 5, **dadurch gekennzeichnet, dass** das Objektiv (1) und das optische Element (11) derart eingestellt sind, dass die Außenseite der Windschutzscheibe (5) durch den ersten Teilbereich (11a) des optischen Elements (11) fokussiert auf dem ersten Bereich der sensitiven Fläche (14) des Halbleiterelements (4) und der Bereich vor dem Fahrzeug durch den zweiten Teilbereich (11b) des optischen Elements (11) auf dem zweiten Bereich der sensitiven Fläche (14) des Halbleiterelements (4) abgebildet wird.

7. Anordnung eines optischen Moduls nach Anspruch 6, **dadurch gekennzeichnet, dass** auf der Außenseite der Windschutzscheibe (5) befindliche Regentropfen (6) und/oder Schmutzpartikel im ersten Bereich der sensitiven Fläche (14) des Halbleiterelements (4) detektiert werden können und ein Ausgabesignal an eine Scheibenwischersteuerung und/oder Scheibenreinigungssteuerung ausgegeben werden kann.

8. Anordnung eines optischen Moduls nach Anspruch 6 oder 7, **dadurch gekennzeichnet, dass** eine Beleuchtungsquelle vorgesehen ist, die den Bereich (9) des Sichtfeldes (10) durch die Windschutzscheibe (5) beleuchtet, der im ersten Bereich der sensitiven Fläche (14) des Halbleiterelements (4) abgebildet wird.

9. Anordnung eines optischen Moduls nach Anspruch 8, **dadurch gekennzeichnet, dass** die elektromagnetische Strahlung der Beleuchtungsquelle über einen flexiblen Lichtleitkörper in die Windschutzscheibe (5) eingekoppelt wird.

10. Anordnung eines optischen Moduls nach Anspruch 8 oder 9, **dadurch gekennzeichnet, dass** der Bereich (9) des Sichtfeldes (10) durch die Windschutzscheibe (5) mit Licht im infraroten Wellenlängenbereich ausgeleuchtet wird und der zweite Teilbereich (11b) des optischen Elements (11) mit einem Filter beschichtet ist, der die Transmission im infraroten Wellenlängenbereich unterdrückt.

11. Anordnung eines optischen Moduls nach einem der Ansprüche 7 bis 10, **dadurch gekennzeichnet, dass** zusätzlich ein kapazitiver Regensensor im Fahrzeug vorgesehen ist und eine gemeinsame Auswerteeinheit die Signale von kapazitivem und kamerabasiertem Regensensor auswertet.

12. Anordnung eines optischen Moduls nach einem der Ansprüche 6 bis 11, **dadurch gekennzeichnet, dass** eine Keilplatte zwischen Windschutzscheibe (5) und Objektiv (1) im Sichtfeld der Abbildung der Außenseite der Windschutzscheibe (5) angeordnet ist.

13. Anordnung eines optischen Moduls nach einem der Ansprüche 9 bis 12, **dadurch gekennzeichnet, dass** ein Auskoppelelement in festem Kontakt mit der Windschutzscheibe (5) angeordnet ist, welches die eingekoppelte elektromagnetische Strahlung auskoppelt, so dass diese im ersten Bereich der sensitiven Fläche (14) des Halbleiterelements (4) abgebildet wird.

14. Anordnung eines optischen Moduls nach Anspruch 13, **dadurch gekennzeichnet, dass** das Auskoppelelement den Teilbereich des Sichtfeldes der Windschutzscheibe (5) bedeckt, der von der Nahbereichsabbildung (9) erfasst wird.

## Claims

1. An optical module comprising
- a semiconductor element (4) having a surface (14) which is sensitive to electromagnetic radiation and
- an objective (1) for projecting electromagnetic radiation onto the sensitive surface (14) of the semiconductor element (4),
wherein the optical module, as a camera system, can be used as a driving environment sensor for driver assistance systems in a vehicle,
wherein an optical element (11) having at least two plane-parallel sub-areas (11 a, 11 b) of different thicknesses is arranged either in the space between the objective (1) and the sensitive surface (14) of the semiconductor element (4) or between individual lenses of the objective in the entire cross-section of the beam path, such that a first distance range (8) is imaged in a first area of the sensitive surface (14) of the semiconductor element (4) by a first sub-area (11 a) of the optical element (11), and a second distance range (9) is imaged in a second area of the sensitive surface (14) of the semiconductor element (4) by a second sub-area (11 b) of the optical element (11),
wherein the optical element (11) has a stepped configuration,
**characterized in that** the optical element (11) is arranged such that the graduation of the optical element (11) is oriented toward the sensitive surface (14) of the semiconductor element (11) and a continuous surface of the optical element (11) is located in the direction facing away from the semiconductor element (4).

2. The optical module according to Claim 1, **characterized in that** a spacer (24) is provided between the semiconductor element (4) and a thinner sub-area (11 a) of the optical element.

3. The optical module according to Claim 2, **characterized in that** the thinner sub-area (11a) completely extends around the thicker sub-area (11 b) of the optical element (11) and the spacer (24, 24') extends around the area between the sensitive surface and the optical element (11) in a frame-like manner.

4. The optical module according to Claim 3, **characterized in that** the spacer (24') is designed as a frame for a sealing compound for sealing the semiconductor element (4) to protect the sensitive surface (14) of the semiconductor element (4) from environmental impacts and stray light.

5. An arrangement of an optical module according to any one of the preceding claims in the interior of a vehicle behind the windshield (5) in the direction of travel in a manner sensing the exterior space.

6. The arrangement of an optical module according to Claim 5, **characterized in that** the objective (1) and the optical element (11) are adjusted such that the exterior surface of the windshield (5) is imaged in a focused manner on the first area of the sensitive surface (14) of the semiconductor element (4) by the first sub-area (11 a) of the optical element (11) and the area ahead of the vehicle is imaged on the second area of the sensitive surface (14) of the semiconductor element (4) by the second sub-area (11 b) of the optical element (11).

7. The arrangement of an optical module according to Claim 6, **characterized in that** rain drops (6) and/or particles of dirt present on the exterior surface of the windshield (5) can be detected in the first area of the sensitive surface (14) of the semiconductor element (4), and an output signal can be output to a wiper control and/or a window cleaning control.

8. The arrangement of an optical module according to Claim 6 or 7, **characterized in that** an illumination source is provided, which illuminates the area (9) of the field of view (10) through the windshield (5) which is imaged in the first area of the sensitive surface (14) of the semiconductor element (4).

9. The arrangement of an optical module according to Claim 8, **characterized in that** a flexible light-guide body couples the electromagnetic radiation of the illumination source into the windshield (5).

10. The arrangement of an optical module according to Claim 8 or 9, **characterized in that** the area (9) of the field of view (10) through the windshield (5) is lit up by light in the infrared wavelength range, and the second sub-area (11 b) of the optical element (11) is coated with a filter which suppresses transmission in the infrared wavelength range.

11. The arrangement of an optical module according to any one of Claims 7 to 10, **characterized in that** a capacitive rain sensor is additionally provided in the vehicle, and a joint evaluation unit evaluates signals from the capacitive rain sensor and the camera-based rain sensor.

12. The arrangement of an optical module according to any one of Claims 6 to 11, **characterized in that** a wedge plate is arranged between the windshield (5) and the objective (1) in the field of view of the imaging of the exterior surface of the windshield (5).

13. The arrangement of an optical module according to any one of Claims 9 to 12, **characterized in that** a decoupling element is arranged in firm contact with the windshield (5), which decoupling element decouples the electromagnetic radiation coupled into the windshield such that said electromagnetic radiation is imaged in the first area of the sensitive surface (14) of the semiconductor element (4).

14. The arrangement of an optical module according to Claim 13, **characterized in that** the decoupling element covers the sub-area of the field of view of the windshield (5) which is sensed by the near-range imaging (9).

## Revendications

1. Module optique, comprenant
- un élément semi-conducteur (4) avec une surface (14) sensible au rayonnement électromagnétique, et
- un objectif (1) pour la projection du rayonnement électromagnétique sur la surface (14) sensible de l'élément semi-conducteur (4),
le module optique pouvant être utilisé comme système de caméra dans un véhicule en tant que capteur d'environnement pour des systèmes d'assistance au conducteur,
un élément optique (11) avec au moins deux zones partielles (11a, 11 b) planes parallèles de différente épaisseur étant disposé soit dans l'espace entre l'objectif (1) et la surface (14) sensible de l'élément semi-conducteur (4), soit entre des lentilles individuelles de l'objectif dans la totalité de la section transversale du trajet des rayons de telle sorte qu'une première zone d'éloignement (8) est reproduite par une première zone partielle (11 a) de l'élément optique (11) dans une première zone de la surface (14) sensible de l'élément semi-conducteur (4), et une deuxième zone d'éloignement (9) est reproduite par une deuxième zone partielle (11 b) de l'élément optique (11) dans une deuxième zone de la surface (14) sensible de l'élément semi-conducteur (4),
l'élément optique (11) étant constitué par étages,
**caractérisé en ce que** l'élément optique (11) est disposé de telle sorte que l'étagement de l'élément optique (11) est orienté vers la surface (14) sensible de l'élément semi-conducteur (4), et **en ce qu'**une surface continue de l'élément optique (11) se trouve dans la direction opposée à l'élément semi-conducteur (4).

2. Module optique selon la revendication 1, **caractérisé en ce qu'**un élément d'espacement (24) est prévu entre l'élément semi-conducteur (4) et une zone partielle (11a) plus mince de l'élément optique.

3. Module optique selon la revendication 2, **caractérisé en ce que** la zone partielle (11a) plus mince entoure complètement la zone partielle (11 b) plus épaisse de l'élément optique (11), et **en ce que** l'élément d'espacement (24, 24') entoure en forme de cadre la zone entre la surface sensible et l'élément optique (11).

4. Module optique selon la revendication 3, **caractérisé en ce que** l'élément d'espacement (24') est constitué en tant que cadre pour une masse de scellement destinée à assurer l'étanchéité de l'élément semi-conducteur (4) pour la protection de la surface (14) sensible de l'élément semi-conducteur (4) vis-à-vis d'influences ambiantes et de la lumière parasite.

5. Agencement d'un module optique selon l'une des revendications précitées dans l'habitacle d'un véhicule derrière le parebrise (5), dans la direction de déplacement, qui capte l'espace extérieur.

6. Agencement d'un module optique selon la revendication 5, **caractérisé en ce que** l'objectif (1) et l'élément optique (11) sont réglés de telle sorte que le côté extérieur du parebrise (5) est focalisé par la première zone partielle (11 a) de l'élément optique (11) sur la première zone de la surface (14) sensible de l'élément semi-conducteur (4), et la zone devant le véhicule est reproduite par la deuxième zone partielle (11 b) de l'élément optique (11) sur la deuxième zone de la surface (14) sensible de l'élément semi-conducteur (4).

7. Agencement d'un module optique selon la revendication 6, **caractérisé en ce que** des gouttes de pluie (6) et/ou des particules d'impuretés situées sur le côté extérieur du parebrise (5) peuvent être détectées dans la première zone de la surface (14) sensible de l'élément semi-conducteur (4) et **en ce qu'**un signal de sortie peut être délivré à une commande d'essuie-glace et/ou à une commande de lave-glace.

8. Agencement d'un module optique selon la revendication 6 ou 7, **caractérisé en ce qu'**il est prévu une source d'éclairage qui éclaire la zone (9) du champ de vision (10) à travers le parebrise (5) qui est reproduite dans la première zone de la surface (14) sensible de l'élément semi-conducteur (4).

9. Agencement d'un module optique selon la revendication 8, **caractérisé en ce que** le rayonnement électromagnétique de la source d'éclairage est injecté dans le parebrise (5) par le biais d'un corps conducteur de lumière flexible.

10. Agencement d'un module optique selon la revendication 8 ou 9, **caractérisé en ce que** la zone (9) du champ de vision (10) à travers le parebrise (5) est éclairée par de la lumière dans la plage de longueur d'onde infrarouge, et **en ce que** la deuxième zone partielle (11 b) de l'élément optique (11) est revêtue d'un filtre qui empêche la transmission dans la plage de longueur d'onde infrarouge.

11. Agencement d'un module optique selon l'une des revendications 7 à 10, **caractérisé en ce qu'**il est en plus prévu un capteur de pluie capacitif dans le véhicule, et **en ce qu'**une unité d'analyse commune analyse les signaux du capteur de pluie capacitif et basé sur la caméra.

12. Agencement d'un module optique selon l'une des revendications 6 à 11, **caractérisé en ce qu'**une plaque en forme de coin est disposée entre le parebrise (5) et l'objectif (1) dans le champ de vision de la reproduction du côté extérieur du parebrise (5).

13. Agencement d'un module optique selon l'une des revendications 9 à 12, **caractérisé en ce qu'**un élément de découplage est disposé en contact fixe avec le parebrise (5) et déclenche le rayonnement électromagnétique injecté de telle sorte que ce rayonnement électromagnétique est reproduit dans la première zone de la surface (14) sensible de l'élément semi-conducteur (4).

14. Agencement d'un module optique selon la revendication 13, **caractérisé en ce que** l'élément de découplage couvre la zone partielle du champ de vision du parebrise (5) qui est captée par la reproduction de la zone proche (9).
